# EUROPEAN PATENT SPECIFICATION

(11) **EP 0 493 421 B1**
(45) Date of publication and mention of the grant of the patent: **22.06.1994**
(21) Application number: 90913445.4
(22) Date of filing: 14.09.1990
(51) Int. Cl.: C04B 35/80

(54) **IN SITU PRODUCTION OF SILICON CARBIDE REINFORCED CERAMIC COMPOSITES**
IN SITU HERSTELLUNG VON SILICIUMCARBIDVERSTÄRKTEN KERAMISCHEN VERBUNDWERKSTOFFEN
PRODUCTION IN SITU DE COMPOSITES CERAMIQUES RENFORCES PAR DU CARBURE DE SILICIUM

(30) Priority: 19.09.1989 US 409054
(43) Date of publication of application: 08.07.1992
(73) Proprietor: THE UNIVERSITY OF BRITISH COLUMBIA, Vancouver, British Columbia V6T 1Z1 (CA)
(72) Inventor: CHAKLADER, Asoke Chandra Das, Vancouver, British Columbia V6T 1B8 (CA); GUPTA, Sankar Das, Toronto, Ontario M5T 1B8 (CA)
(74) Representative: Heath, Derek James
(86) International application number: CA9000297
(87) International publication number: WO9104234

(56) References cited:
- EP-A- 309 128
- US-A- 4 657 877

## Description

The present invention relates to a method for making ceramic composites reinforced by silicon carbide whiskers, fibres and particulates, which are produced in situ in the method of making the composite.

Ceramic composites are gaining emphasis in diverse applications such as heat engine components, cutting tools and various wear resistant parts. The ceramic composites have typically improved fracture toughness and improved wear properties. Conventional ceramics are generally monolithic materials and have low fracture toughness. This makes these materials brittle and they are liable to crack under stressed conditions, and are not very useful for diverse demanding industrial applications. Monolithic ceramic materials such as silicon carbide, alumina, silicon nitride and mullite have low fracture toughness of between 2.5 to 4.5 (K_{IC}:MPa√m).

There has been extensive research underway to produce ceramic composites of higher fracture toughness, using matrix such as alumina, silicon nitride and silicon carbide, reinforced by materials such as silicon carbide particles which may be formed, for example, as whiskers or fibres.

Alumina as a matrix material with silicon carbide whisker reinforcement for ceramic composites have received strong attention. Fracture toughness and strength of alumina-SiC whisker composites (A1₂0₃-SiC) are much higher than monolithic alumina. The improved strength and fracture toughness are retained to high temperatures of around 1200°C. The reports on SiC whisker reinforced alumina matrix composites are so encouraging that the product is already being commercially produced as cutting tools, wear dies and other applications. Cutting tool materials typically contains around 30% SiC whiskers and show much better resistance to wear and fracture in machining operations. It has even been reported by E.R. Biollman, P.K. Mehrotra et al. Am.Cer.Soc.Bull., 1988, 67, 1016, that the estimated savings in field tests of machining a superalloy is 73% with the A1₂0₃-SiC composite tools as compared to machining with just A1₂0₃ tools.

Typically these composites (G.C. Wei, U.S. Patent 4,543,345) are produced by mechanically mixing single crystal SiC whiskers with fine ceramic powders such as alumina (A1₂0₃) such that the SiC whiskers are uniformly and homogeneously dispersed. This homogeneous dispersion is normally difficult to achieve through mechanical mixing processes. The mixture is then densified through techniques such as hot pressing at pressures in the range of 28 to 70 MPa and temperatures in the range of about 1600 to 1950°C with pressing times varying about 0.75 to 2.5 hours.

There are a number of major problems with the above ceramic composite and process for making same. The silicon carbide whiskers are very expensive as they are made primarily through a VLS process. The silicon carbide whiskers are extremely carcinogenic and are very dangerous to handle. The dispersion of the SiC whiskers is difficult to achieve and elaborate processing techniques are necessary. With mechanical methods of mixing whiskers and ceramic matrix powders, there is the possibility of whiskers clustering together and whisker damage, and the extent of whisker loading is limited. For example in order to obtain a good dispersibility of whiskers and thus improve the strength of the composite, both ultrasonic dispersion techniques and finer particle, non-agglomerated matrix powder have to be used (P.F. Becher and G.C. Wei, Journal of the American Ceramic Society., 1084, 67,C267). Very elaborate processing techniques, involving flotation or sedimentation from dispersions of the components, were found to be effective in eliminating the potential flaw types (J. Homery, W.L. Vaughn and M.K. Ferber in the American Ceramic Society Bulletin, 1987,67,333). With the new information that the SiC whiskers are very carcinogenic, all these complex processing techniques have become very unpleasant.

Accordingly, it is a primary aim or objective of the present invention to provide a process for making ceramic composite powders strengthened with silicon carbide particles wherein the SiC phase is produced in situ in the ceramic powder matrix.

Broadly the present invention relates to a process for making the alumina-SiC composites ceramic powder comprising forming a mixture of alumino-silicates and carbon particles as precursor material, and reacting that mixture at a temperature of above 1500°C to transform the mixture into said composite ceramic powder having Al₂O₃ and silicon carbide as the major phases while eliminating substantially all alkalies and MgO by vaporisation.

Preferably the temperature is selected in the range of 1600°C to 1800°C, while the carbon particles will be in shapes selected from the group of platelets and fibres.

Preferably, the mixture will further include silicates of zirconium and the resultant ceramic powder formed after reacting will further include ZrO₂. The mixture may further comprise carbon elements which are more highly reactive than said carbon particles to facilitate a first stage of the reaction.

Preferably the alumino-silicate will be a clay, raw or calcined, mullite, kyanite, sillimanite, pyrophyllite or combinations thereof. More preferably, the alumino-silicate will be synthetic alumino-silicate.

Preferably the ceramic powder will then be densified, for example by hot pressing, hot isostatic pressing or sintering, to produce a consolidated composite product.

Example of starting materials for the present invention for providing the alumino-silicates may be pure kaolinitic clays, raw or calcined, mullite, kyanite, sillimanite, pyrophyllite, etc. Other clays may also be used but because of impurities in the clays, the final product would naturally contain other phases. Instead of clays, synthetic alumino-silicates (i.e. alumino-silicates formed by freeze drying, co-precipitation, etc.) may also be used. What is necessary is that the starting material should be a source of final alumina -Al₂O₃.

The starting material must also provide a source of silica which normally will come from the alumino-silicates (and Zirconium silicates) but may also be provided through added silica.

Another basic material is carbon in the form of carbon particles which is necessary for reduction of the silica and to form the silicon carbide (SiC) reinforcing phase. The carbon particles may be in any desired shape, for example, in the form of hexagonal flakes, (random) particulates or fibres. The size and shape of the carbon particles determines the final size and shape of the silicon carbide material in the resultant ceramic powder or composite.
#1 The simplest stoichiometric mixture to produce the composite is:

   Al₂0₃ 2Si0₂ 2H₂0 + 6C → A1₂0₃ + 2SiC + 4C0 + 2H₂0 (1)

   (Kaolin)
   This mixture would produce a composite having the two major phases alumina and silicon carbide in the proportion of A1₂0₃ (∼56wt%) and SiC (∼44wt%) (assumed no Si0 loss from the system).
#2 If it is desired that the concentration of SiC phase be changed, i.e. increased or decreased then a mixture of clay, alumina (or a source of alumina), silica (or a source of silica) and carbon, may be adjusted, for example, as follows:
   (i) To decrease the concentration of SiC in the stoichiometric mixture as in #1.

      A1₂0₃ 2Si0₂ 2H₂0 + A1₂0₃₍ₓ₎ + 6C → A1₂0₃₍₁₊ₓ₎ + 2SiC + 4C0 + 2H₂0 (2)

      where x = 0 to 6
   (ii) To increase the concentration of SiC in the stoichiometric mixture as in #1. 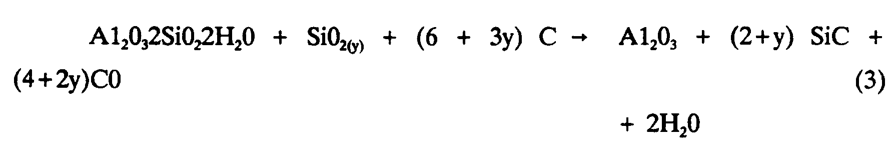
   where y = 0 to 6
#3 It is also possible to carry out the present invention starting with synthetic alumino-silicate or a mechanical mixture of alumina, silica and carbon powders. The proportion of alumina, silica and carbon will vary depending upon the extent of the SiC phase desired in the composites. The stoichiometric reaction for the formation of these composites is as follows:

   (A1₂0₃)ₘ + (Si0₂)ₙ + Cₚ → m A1₂0₃ + n SiC + 2n C0

   where p = 3n; n = 1 to 7; m = 1 to 4; and m/n = 1 to 7
#4 To improve on the fracture toughness of the A1₂0₃-SiC composites, it may be desirable to add Zr0₂ into the system. Zirconium silicate (ZrSi0₄) will provide Zr0₂ after dissociation and Si0₂ will combine with the carbon and be converted to SiC. Thus SiC can be produced from both alumino-silicates and zircon powders. The reactions leading to the formation of A1₂0₃, Zr0₂ and SiC can be represented as follows:

   A1₂0₃. 2Si0₂. 2H₂0 + ZrSi0₄ + 9C → A1₂0₃ + 3SiC + Zr0₂ + 6C0 + H₂0 (5)

   The amount of the zirconia phase in the composite can be easily varied by adding different amounts of zircon. The Zr0₂ formed by the decomposition of the zircon is very finely divided and helps in improving the toughness. Generally ZrO₂ will be present in the composite in the range of 5 to 20 weight percent ZrO₂, which requires the zirconium silicate to be present in the raw materials in the amount of about 7.5 to about 30 % by weight of the raw material mixture of clay, carbon and ZrSiO₄.
   Similarly the composite may include TiC in the range of about 5 to 30 % by weight in the powder by adding TiO₂ to the raw material mix of clay, carbon and TiO₂.
   It is believed that TaO₅, CrO₃, WO₃ or MoO₃ could also be incorporated in useful proportions in place of the TiO₂ or ZrO₂ to form a composite powder containing Al₂O₃ and SiC and forming in situ other (corresponding) carbide phases.
#5 The carbon in mixtures described above in #1 to #4 may be any form of pure carbon which will reduce the Si0₂ in clay or in synthetic alumino-silicate or in added Si0₂ or in the ZrSiO₄ and convert them into SiC. The SiC particles produced in mixtures #1 to #4 are random in shape. But if it is desired that the silicon carbide particles (all or some) in the composites should have certain morphology such as fibres, rods or hexagonal platelets, then the carbon in mixtures #1 to #4 can be partly (or all) replaced by carbon in appropriate shaped elements, e.g. in the form of hexagonal platelets or graphite (or carbon) fibres.
   It should be noted that the function of carbon is two-fold in the formation of silicon carbide from Si0₂. First, carbon reduces Si0₂ into Si0 which is a vapour species. This Si0 then migrates to other carbon particles to form SiC and C0.
   Thus in the process of formation of A1₂0₃ and SiC from A1₂0₃2Si0₂2H₂0 (clay), a weight loss of ∼ 40% is encountered. It is desirable then to add two types of carbon to the mixtures, (i) highly reactive to facilitate the first stage of the reduction reaction and, (ii) stable carbon, such as graphite flakes or fibres for the formation of morphologically controlled SiC particles.
   It is important to note that there would always be some loss of Si from the system as Si0, along with C0. Depending upon the closeness of the reaction vessel (this cannot be completely closed as removal of C0 must take place in order that reactions (1) to (5) may proceed) a weight loss (because of loss of Si0) between 3 to 5wt% or more has been encountered. During formulation of the raw materials mix batches, this loss of silicon as Si0 should be taken into consideration.

### Processing Steps:

Appropriate proportions of materials (silicates and carbon) can be mixed dry or wet, however if wet mixing is used the mixture formed should be filtered and dried. For stoichiometric mixture of raw clays and carbon (reaction #1), the amounts would be about 78.2 wt% of raw kaolinite and 21.8 wt% of carbon and for calcined clays, this will be about 75.5 wt% of calcined Kaolinite and about 24.5 wt% of carbon.

For a composite containing also zirconia as a toughening agent, a mixture of raw kaolin, zircon (very finely ground) and carbon will produce a mixture of A1₂0₃, Zr0₂ and SiC in the system. For example, if it is desired to produce a composition containing 15 wt% Zr0₂, a mixture of 66 gms of kaolin, 13 gms of zircon and 21 gms of carbon should give nominally 45 wt% A1₂0₃, 15 wt% Zr0₂ and 40 wt% SiC, assuming no Si0 is lost from the system.

If it is desired that the level of SiC in the composite should be low, for example at levels of between 10 to 25 wt%, then it will be necessary to adjust the initial formulations such that some A1₂0₃ or Zr0₂ as a finely divided powder is added to the starting material such that the final composition will be as desired.

When very high levels of finely divided SiC are present in the ceramic powder, it is difficult to densify the powder without using techniques such as hot pressing.

The thoroughly mixed powder formed as above described is then calcined in an inert atmosphere (preferably Ar or He) at a temperature greater than 1500°C and more conveniently above 1600°C for the reaction to complete more quickly. This firing step is crucial for the reactions (1) to (5) to take place and almost go to completion forming a final mixture of A1₂0₃ (and Zr0₂) and SiC as the major phases. Obviously the temperature must not be so high that the desired end products are decomposed or other undesireable phases are formed.

Depending on the impurities present in the starting materials, e.g. clays and the time and temperature of firing, the minor phases may include TiC, mullite and carbon. It has also been possible to take reaction (1) to completion, i.e. the only major phases present would be α-A1₂0₃ and β-SiC with no mullite phase when the mixtures were fired at 1700°C for several hours (for a batch of 10 gms or more).

If the powder is pelletized before firing, the reactions leading to the formation of A1₂0₃ and SiC take shorter times. Pelletization also reduces Si0 loss during these reactions.

The reaction sequence in the formation of α-A1₂0₃ and β-SiC from clay and carbon may be as follows:

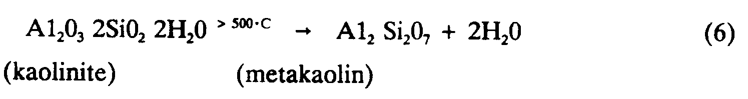

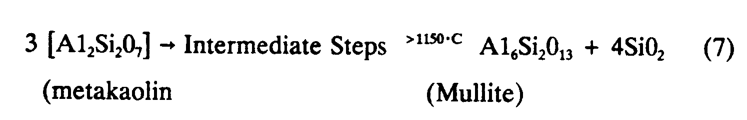

Al₆Si₂O₁₃ + 6C → 3Al₂O₃ + 2SiC + 4CO (8)

Depending upon the A1₂0₃ to Si0₂ ratio, an equation equivalent to (8) would apply for a synthetic alumino-silicate and carbon mixture.

The morphology of the silicon carbide particles after calcination can be controlled by using morphologically controlled carbon particles. For example, addition of ∼ 10wt% of carbon fibres (or graphite flakes), the remaining carbon in the mixture being amorphous lamp black, resulted in the formation of silicon carbide particles in the form of both fibres and random shaped particles. The SiC fibres are formed from the carbon fibres added in the mixture and random shaped particles originated from the conversion of lamp black carbon into silicon carbide particles.

It is also important to note that natural clay materials have impurities such as Ca0, Mg0, Na₂0, K₂0, Ti0₂, Fe₂0₃ etc. and it is thought that these impurities would affect the final properties of the composites. However, it has been found that the heat treatment that is necessary for the formation of A1₂0₃ and SiC from clay minerals, also removes Na₂0, K₂0 and Mg0 by vaporization because of the presence of strong reducing atmosphere during reactions (1) to (4). Thus, the reactions which produce the major phases A1₂0₃ and SiC, also eliminates some of the harmful oxides present in raw clay materials. Chemical analysis carried out on the alumina-silicon carbide composites produced from mixtures of kaolinitic clay and carbon showed that almost all of alkalies and Mg0 disappeared from the system by vaporization.

After reacting to form the ceramic powder, this powder may be consolidated as desired, for example, to almost full density either by hot-pressing or hot-isostatic pressing. Prior to this final step of consolidation however, complex shapes by slip casting, injection molding, etc., can be pre-fabricated before hipping. For simple shapes, such as cylindrical specimens (billets and disks) these can be directly hot-pressed in a graphite die. From these disks, small specimens, e.g. cutting tools can be prepared by sawing or other techniques.

Because of the presence of the silicon carbide, it has been found to be difficult to sinter these powders (i.e. without pressure) to high density (>0.90 of the theoretical). Hot-pressing these powders above 1800°C under 20 MPa (or greater) resulted in products having >95% of theoretical density. Because of the higher pressures that can be applied during the hipping the final consolidation step can be done at a lower temperature.

The properties of the composite products thus produced with different combinations of precursor materials, such as clay, alumina, silica and carbon have been found to be acceptable for several commercial applications. For example, hot-pressed products having >98% theoretical density have been produced with hardness greater than 2000 Kg/mm² on Vicker's hardness scale and fracture toughness (K_{IC}) in the range 2.5 to ∼ 7.0 MPa√m, depending upon the final density achieved, composition and processing conditions used.

The following examples are given for the purpose of illustrating the present invention without being intended to limit its scope.

### Example I

A batch of raw Georgia kaolin (AJAX grade) clay was mixed with carbon (lamp black) in stoichiometric proportion, i.e. 78 g of raw (uncalcined) clay and 22 g of carbon was dry-mixed in a vibratory ball mill (with alumina balls). From this thoroughly mixed powder, small cylindrical pellets (1 cm dia., 1 cm thick) and large cylindrical pellets (2.54 em dia. and 1 cm thick) were cold-pressed. Loose powder, small and large pellets, was subjected to different heat treatments. It has been observed that small pellets took lower temperature (e.g. 1600°C) and shorter time (0.5 hr), compared to larger pellets, for complete conversion to alumina and silicon carbide. Larger pellets required 1700°C for 1.5 hours. Si0 loss from the loose powder was also more noticeable. The phases were identified by x-ray diffraction analysis. SEM and EDX studies showed random-shaped particles and homogenous mixtures of the two phases.

This mixture then was hot-pressed first at 1700°C and then at 1900°C for 10 minutes. The bulk density of the hot-pressed specimen was 3.60 gm/cm³. (Note: The bulk density or theoretical density of a fully dense pellet of 56 wt% A1₂0₃ and 44 wt% SiC is 3.66 g/cm³). The Vicker's hardness of the specimens varied between 1950 and 2400 kg/mm². The mean hardness being ∼ 2300 kg/mm². The fracture toughness (K_{IC}) value varied between 3.75 and 6.20 MPa√m, the mean K_{IC} value of ∼ 5.7 MPa√m.

### Example 2

A batch of calcined Georgia kaolin (calcined at 750°C) was mixed with (lamp black) carbon in stoichiometric proportions, i.e. 75.5 g of calcined clay and 24.5 g of carbon, was thoroughly dry-mixed in a ball mill. This mixture was then cold-pressed into large pellets (2.5 cm dia) and fired at 1650°C for 30 minutes. An x-ray diffraction analysis showed that 20-25% mullite was present in this system. The specimens were refired at 1700°C for 1 hour in argon, which had no detectable mullite phase.

The fired mixture was hot-pressed at 1900°C under 3000 psi to make pellets. The bulk density varied in the range of 3.55-3.587 g/cm³. The Vicker's hardness value of these materials ranged from 2000 to 2150 Kg/mm² and the average fracture toughness value was ∼ 4.5 MPa√m.

### Example 3

A batch of mixtures of 65 g of raw kaolinitic clay (uncalcined), 12.3 gms of carbon (lamp black) and 6.1 g of high strength chopped graphite fibres (1 to 5 »m dia. and 0.3- 0.5 cm long) were wet mixed in isopropyl alcohol. The mix was filtered, dried and pelletized. This mixture was then calcined in argon at 1700°C for 1.5 hours. X-ray analysis showed only A1₂0₃ and SiC phases. SEM analysis showed presence of SiC fibres distributed throughout the mass. This calcined powder was then wet ball milled in alcohol and pelletized (cylindrical discs). These discs were hot pressed at 1900°C for 15 mins. The resulting products had a density varying from 3.45 to 3.60 g/cm³. The final composites had a Vicker's hardness of greater than 2000 Kg/mm² and fracture toughness (K_{IC}) in the range 3.0 to 8.0 MPa√m.

### Example 4

A mixture of raw (uncalcined) kaolin clay (99gms), natural zirconium silicate (Zircon - 19.5 g) and carbon (31.5 g) was prepared by wet milling. The batch was filtered, dried and dry-mixed (again). This powder was used to make discs which were calcined at 1750°C for 2 hours. X-ray analysis showed that they were composed of A1₂0₃, Zr0₂ and SiC. This powder mixture was hot-pressed at 1900°C for 20 mins. The final pellets have Vicker's hardness > 2000 Kg/mm² and fracture toughness K_{IC} in the range 5 to > 8 MPa√m.

### Example 5

A synthetic mixture of A1₂0₃ and Si0₂, having the equivalent composition of mullite (3A1₂0₃ 2Si0₂) was produced from a freeze-dried mixture of A1₂(S0₄)₃·XH₂0 and silica gel. This freeze-dried powder has a weight loss of ca. 75% on calcining. The powder was only partially calcined and then carbon powder was added to it. The weight ratio of calcined alumina-silica phase to carbon is 36 to 6, i.e. 36 g of calcined alumino-silicate powder to 6.0 g of carbon. This mixture is then heated to 1650°C for 2 hours, producing A1₂0₃ and SiC in situ. This calcined powder was then hot-pressed at 1850°C for 2 hours to form discs. The final discs have Vicker's hardness greater than 2000 Kg/mm² and fracture toughness (K_{IC}) in the range 3 to 6.5 MPa√m.

### Example 6

A mixture of raw (uncalcined) pyrophyllite (78 grams) and carbon (lamp black - 31.2 grams) was prepared by dry mixing a ball mill. Cylindrical pellets of two inches in diameter were produced by cold pressing. These pellets were fired at 1650 - 1700°C for one hour in argon. The fired pellets were soft and could be easily crushed. X-ray analyses showed that the final mixture was composed of SiC and Al₂0₃ with traces of mullite.

### Example 7

A mixture of raw (uncalcined) kyanite (78 grams) and carbon (lamp black - 17.4 grams) was prepared by dry mixing in a ball mill. Cylindrical pellets of two inches in diameter were produced by cold pressing. These pellets were fired at 1650 - 1700°C for one hour in argon. The fired pellets were soft and could be easily crushed. X-ray analyses showed that the final mixture was composed of SiC and Al₂0₃.

### Example 8

A mixture of raw clay (kaolinite - 78 grams) with lamp black carbon (14.5 grams) was prepared by dry mixing. Pellets were cold pressed and then fired in argon at approx. 1550-1600°C for two hours. The final mixture was found to contain mullite and SiC as the major phases and Si0₂ as a minor component, as evidenced by x-ray diffraction analyses.

### Example 9

A mixture of raw clay (kaolinite - 78 grams) with lamp black carbon (7.3 grams) was prepared by dry mixing. Pellets were cold pressed and then fired in argon at approx. 1550-1600°C for two hours. X-ray analyses showed the final mixture contained mullite, SiC and Si0₂ (cristobalite).

### Further Experiments

The following Table 1 provides a list of different experiments carried out with different reactants and observations made.

**TABLE 1**

| No. | Reaction | Temp. (C) | Temp Meas. Device | Reaction Time (Min.) | Comments |
|---|---|---|---|---|---|
| 1 | C + Clay | 1500 | Opt. Pyro. | 60 | Test run. |
| 2 | C+Clay+Ti0₂ | 1500 | Opt. Pyro. | 60 | Incomplete Reaction |
| 3 | Refired | 1500 | Opt. Pyro. | 60 | Complete Reaction |
| 4 | C+Clay+ZrSi0₄ | 1650 | Opt. Pyro. | 75 | Middle portion of top pellet is unreacted. |
| 5 | C+Clay+Ti0₂ | 1600 | Opt. Pyro. | 90 | Complete Reaction |
| 6 | C+Clay+Ti0₂ | 1600 | Opt. Pyro. | 60 | Incomplete Reaction |
| 6(a) | Refired | 1600 | Opt. Pyro. | 60 | Complete Reaction |
| 7 | C+Clay+ZrSi0₄ | 1600 | Opt. Pyro. | 60 | Incomplete Reaction |
| 7(a) | Refired | 1600 | Opt. Pyro. | 35 | ZrC peak was evident. |
| 8 | C+Clay+ZrSi0₄ | 1600 | Opt. Pyro. | 80 | Complete Reaction. |
| 9 | C+Clay+ZrSi0₄ | 1600 | Opt. Pyro. | 95 | Complete Reaction. |
| 10 | C+Si0₂+ZrSi0₄ | 1600 | Opt. Pyro. | 60 | Incomplete Reaction. |
| 10(a) | Refied | 1600 | Opt. Pyro. | 60 | Incomplete Reaction. |
| 11 | C + Clay | 1350 | Pyro.+Thermo | 90 | Incomplete Reaction (SiC and mullite were evident but not A1₂0₃). |
| 12 | C+Si0₂+ZrSi0₄ | 1650 | Pyro.+Thermo | 60 | Incomplete Reaction. |
| 13 | C+Si0₂+ZrSi0₄ | 1700 | Pyro.+Thermo | 60 | Incomplete Reaction. (SiC, Zr0₂ and ZrSi0₄ were evident). |
| 13(a) | Refired | 1700 | Pyro.+Thermo | 35 | Zr0₂ and ZrC were evident. |
| 14 | C+Si0₂+ZrSi0₄ | 1700 | Pyro.+Thermo | 80 | Top pellet: Si0₂, Zr0₂ Bottom pellet: ZrC + SiC |
| 15 | C+Si0₂+ZrSi0₄ | 1680 | Pyro.+Thermo | 60 | ZrC & SiC were evident. |

Note the comment 'complete reaction' means there was substantially no silicate and no unreacted carbon left.

It has been found that operating for example with Zircon if the reaction is carried on for a long time or at a high temperature, ZrC is formed in addition to Zr0₂ formation. For example, at 1800°C predominantly ZrC was formed whereas 1600-1700°C for a short time (up to proximately 30 minutes) predominantly ZrO₂ was formed.

In a specimen produced using clay, carbon and Ti0₂ and reacted to form Al₂0₃, SiC and TiC composite powder it was found under examination using a scanning elector microscope (SEM) that the SiC particles were spherical in shape and the TiC phase was evenly distributed in the alumina grains which were randomly formed.

Having described the invention, modifications will be evident to those skilled in the art without departing from the scope of the invention as defined in the appended claims.

## Claims

1. A process for making alumina-SiC composite ceramic powder, comprising forming a mixture of alumino-silicates and carbon particles as precursor material, and reacting that mixture at a temperature of above 1500°C to transform the mixture into said composite ceramic powder having Al₂O₃ and SiC as the major phases while eliminating substantially all alkalies and MgO by vaporisation.

2. A process as defined in claim 1, wherein said carbon particles are in shapes selected from the group of platelets and fibres.

3. A process as defined in claim 1 or claim 2, wherein said mixture further comprises carbon elements which are more highly reactive than said carbon particles to facilitate a first stage of the reaction.

4. A process as defined in any one of claims 1-3, wherein said alumino-silicate is a synthetic alumino-silicate.

5. A process as defined in any one of claims 1-3, wherein said alumino-silicate is selected from the group of clays, mullite, kyanite, sillimanite, pyrophyllite or mixtures thereof.

6. A process as defined in claim 1, wherein said alumino-silicate is a clay.

7. A process as defined in any one of claims 1-6, wherein said temperature is selected in the range of 1600°C to 1800°C.

8. A process as defined in any one of claims 1-7, wherein said mixture further comprises zirconium silicate and said powder includes zirconium oxide.

## Patentansprüche

1. Verfahren zur Herstellung eines keramischen Tonerde/SiC-Verbundpulvers, umfassend die Bildung eines Gemisches aus Aluminosilicaten und Kohlenstoffteilchen als Vorläufermaterial, und Umsetzung des Gemisches bei einer Temperatur oberhalb 1500°C, um das Gemisch in das keramische Verbundpulver mit Al₂O₃ und SiC als Hauptphasen umzusetzen, während im wesentlichen alle alkalischen Substanzen und MgO durch Verdampfen ausgeschlossen werden.

2. Verfahren nach Anspruch 1, wobei die Kohlenstoffteilchen in Formen vorliegen, ausgewählt aus der Gruppe von Plättchen und Fasern.

3. Verfahren nach Anspruch 1 oder 2, wobei das Gemisch ferner Kohlenstoffelemente enthält, die reaktionsfähiger sind als die Kohlenstoffteilchen, um eine erste Stufe der Reaktion zu erleichtern.

4. Verfahren nach einem der Ansprüche 1 bis 3, wobei das Aluminosilicat ein synthetisches Aluminosilicat ist.

5. Verfahren nach einem der Ansprüche 1 bis 3, wobei das Aluminosilicat ausgewählt ist aus der Gruppe von Tonen, Mullit, Kyanit, Sillimanit, Pyrophyllit oder Gemischen davon.

6. Verfahren nach Anspruch 1, wobei das Aluminosilicat ein Ton ist.

7. Verfahren nach einem der Ansprüche 1 bis 6, wobei die Temperatur im Bereich von 1600 bis 1800°C gewählt wird.

8. Verfahren nach einem der Ansprüche 1 bis 7, wobei das Gemisch zusätzlich Zirkoniumsilicat enthält und das Pulver Zirkoniumoxid umfaßt.

## Revendications

1. Procédé de production d'une poudre céramique composite d'alumine-SiC, qui comprend la formation d'un mélange d'aluminosilicates et de particules de carbone à titre de matériau précurseur, et la réaction de ce mélange à une température supérieure à 1500°C pour transformer le mélange en ladite poudre céramique composite possédant Al₂O₃ et SiC comme phases principales tout en éliminant pratiquement tous les alcalis et MgO par vaporisation.

2. Procédé selon la revendication 1, dans lequel lesdistes particules de carbone sont sous une forme choisie dans le groupe des paillettes et des fibres.

3. Procédé selon la revendication 1 ou 2, dans lequel ledit mélange comprend en outre des éléments de carbone qui sont plus hautement réactifs que lesdites particules de carbone afin de faciliter une première étape de la réaction.

4. Procédé selon l'une quelconque des revendications 1 - 3, dans lequel ledit aluminosilicate est un aluminosilicate synthétique.

5. Procédé selon l'une quelconque des revendications 1 - 3, dans lequel ledit aluminosilicate est choisi dans le groupe comprenant les argiles, la mullite, la cyanite, la sillimanite, la pyrophyllite ou leurs mélanges.

6. Procédé selon la revendication 1, dans lequel ledit aluminosilicate est une argile.

7. Procédé selon l'une quelconque des revendications 1 - 6, dans lequel on choisit ladite température dans l'intervalle allant de 1600°C à 1800°C.

8. Procédé selon l'une quelconque des revendications 1 - 7, dans lequel ledit mélange comprend en outre du silicate de zirconium et ladite poudre englobe de l'oxyde de zirconium.
